# FASCICULE DE BREVET EUROPEEN

(11) **EP 2 173 619 B1**
(45) Date de publication et mention de la délivrance du brevet: **22.05.2019**
(21) Numéro de dépôt: 08826964.2
(22) Date de dépôt: 11.07.2008
(51) Int. Cl.: B64G 1/40, F17C 13/08

(54) **RÉSERVOIR CRYOGÉNIQUE ET LANCEUR SPATIAL COMPRENANT UN TEL RÉSERVOIR**
KRYOGENER TANK UND TRÄGERRAKETE MIT EINEM SOLCHEN TANK
CRYOGENIC TANK AND SPACE LAUNCHER COMPRISING SUCH A TANK

(30) Priorité: 07.08.2007 FR 0756971
(43) Date de publication de la demande: 14.04.2010
(73) Titulaire: L'Air Liquide Société Anonyme pour l'Etude et l'Exploitation des Procédés Georges Claude, 75007 Paris (FR)
(72) Inventeur: LACAPERE, Jérôme, F-38960 Saint Etienne De Crossey (FR)
(74) Mandataire: De Cuenca, Emmanuel Jaime
(86) Numéro de dépôt international: PCT/FR2008/051306
(87) Numéro de publication internationale: WO 2009/019374

(56) Documents cités:
- EP-A- 0 522 954
- EP-A- 1 248 031
- GB-A- 1 322 251
- US-A- 5 279 323
- US-A- 5 901 557

## Description

La présente invention concerne un réservoir cryogénique ainsi qu'un lanceur spatial comprenant un tel réservoir.

L'invention concerne plus particulièrement un réservoir cryogénique destiné à contenir un fluide cryogénique, en particulier réservoir de lanceur spatial destiné à contenir un ergol cryogénique, comprenant une paroi délimitant un volume de stockage pour le fluide cryogénique.

L'invention concerne notamment la problématique de gestion dynamique et thermique des ergols cryogéniques contenus dans de tels réservoirs lors des phases transitoires précédent ou suivant une éventuelle phase balistique ou pendant la phase balistique lorsque celle-ci est accompagnée de roulis.

En phase balistique, ou durant les phases transitoires de mises à postes des satellites, les ergols peuvent mouiller la totalité des parois de leur réservoir. Ceci entraîne une évaporation extrêmement importante du liquide cryogénique dans le réservoir ainsi qu'un fort refroidissement du dôme gazeux situé au dessus de la partie liquide du réservoir.

Des solutions à ce problème sont connues pour des ergols non-cryogéniques (appelés ergols stockables). Ces solutions sont basées sur les forces capillaires. Les ergols sont retenus en partie inférieure du réservoir (proche de la sortie liquide) par capillarité.

Pour les fluides cryogéniques, ces solutions sont difficilement applicables en raison d'instabilités thermo-capillaires et de possibles évaporations près des systèmes capillaires entraînant un assèchement des systèmes et donc une perte d'efficacité.

De plus, les systèmes proposés laissent remonter les ergols le long des parois et la problématique du fort taux d'évaporation n'est pas résolue.

Il existe également des solutions utilisant des anneaux anti-ballottant sur les parois des réservoirs pour casser les vagues issues du ballottement. Cependant, ces anneaux ne permettent pas de retenir tout l'ergol dans le cas de fortes perturbations dynamiques ou de roulis prolongé pendant la phase balistique.

Ces solutions ne s'appliquent pas de façon satisfaisante aux phases transitoires de fortes amplitudes qu'on peut rencontrer dans les lanceurs spatiaux pendant lesquelles le réservoir est soumis à des perturbations dynamiques ainsi qu'aux phases balistiques qui entraînent le liquide vers le haut du réservoir. La problématique du mouillage important des parois et du refroidissement du dôme gazeux n'est pas non plus résolue par ces solutions

Des solutions dites magnétiques (applicables aux ergols cryogéniques) sont également décrites dans le document US6159271.

Ces systèmes proposent de réorienter le liquide et de le maintenir en position au moyen d'un champ magnétique appliqué pour attirer le liquide d'une extrémité du réservoir vers l'autre extrémité du réservoir.

Les phénomènes transitoires ne sont donc pas pris en compte (ou partiellement) par les solutions existantes.

Le document US5279323A décrit un réservoir selon le préambule de la revendication 1.

C'est-à-dire que le réservoir cryogénique comporte au moins une cloison située dans le volume de stockage, ladite cloison délimitant des volumes supérieur et inférieur pour le fluide dans le réservoir communiquant via au moins une ouverture formée dans la cloison, pour d'une part permettre l'écoulement du liquide par gravité depuis le volume supérieur vers le volume inférieur et, d'autre part empêcher la remontée du fluide depuis le volume inférieur vers volume supérieur sous l'action de forces d'accélération.

Un but de la présente invention est de pallier tout ou partie des inconvénients de l'art antérieur relevés ci-dessus.

Le réservoir selon l'invention est défini par la partie caractérisante de la revendication 1, c'est-à-dire que la cloison s'étend depuis la paroi du réservoir vers le centre du volume de stockage en s'inclinant légèrement jusqu'à l'ouverture en direction de l'extrémité inférieure du réservoir.

Selon l'invention, les ergols s'écoulent normalement pendant la phase de poussée et sont ensuite retenus dans la partie inférieure du réservoir (proche de la sortie liquide) lorsque la phase transitoire est exécutée. Le liquide ne se répand donc pas ou très peu le long des parois du réservoir. Le taux d'évaporation et d'échauffement du liquide cryogénique s'en trouve nettement réduit.

La solution proposée résout les problèmes engendrés par les phases transitoires ainsi que les phases balistiques avec du roulis.

La solution proposée traite les aspects thermiques du problème en diminuant l'évaporation et l'échauffement du liquide stocké. De plus, l'invention permet de moins refroidir le dôme gazeux dans ces situations.

Selon l'invention, la cloison est flexible et s'étend sur la majorité de la section intérieure du réservoir selon une direction sensiblement perpendiculaire à un axe vertical du réservoir passant par les extrémités supérieure et inférieure du réservoir, le rapport entre d'une part la surface de l'ouverture de la cloison et, d'autre part, la section intérieure du réservoir dans un plan sensiblement perpendiculaire à l'axe vertical du réservoir et passant par le plan de l'ouverture étant compris entre 0,01 et 0,1. Par ailleurs, des modes de réalisation de l'invention peuvent comporter l'une ou plusieurs des caractéristiques suivantes:
- la cloison comporte une portion tubulaire orientée vers l'extrémité inférieure du réservoir et définissant l'ouverture,
- la cloison est située sensiblement à mi-hauteur du réservoir,
- la cloison est constituée de tissu de verre.

D'autres particularités et avantages apparaîtront à la lecture de la description ci-après, faite en référence aux figures dans lesquelles :
- la figure 1 représente une vue schématique et en coupe d'un exemple de réalisation de réservoir selon l'invention,
- les figures 2 à 6 représentent le réservoir de la figure 1 contenant du liquide cryogénique soumis respectivement à quatre configurations distinctes de perturbations dynamiques,
- les figures 7 à 9 illustrent un autre exemple de réalisation de l'invention appliquée à un réservoir dit à fond concave.

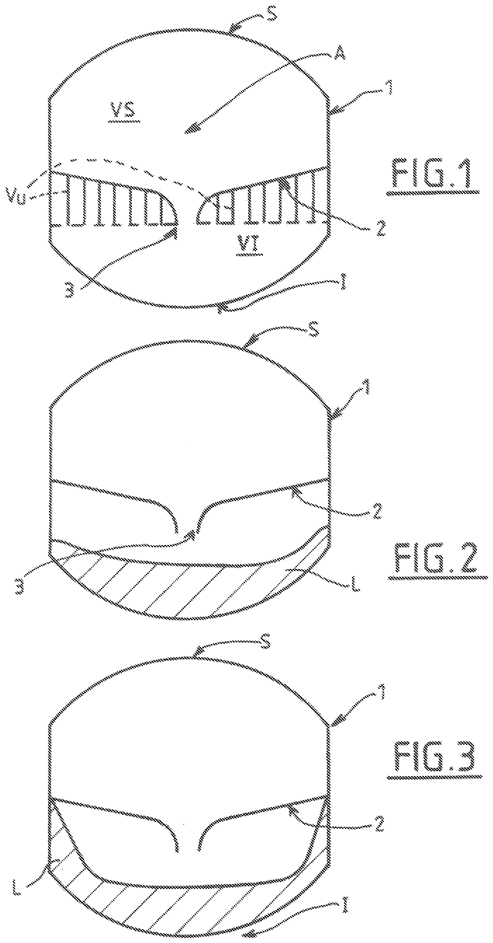

Le réservoir représenté à la figure 1 comprend une paroi 1 délimitant un volume de stockage pour le fluide cryogénique (par exemple une portion centrale sensiblement cylindrique et deux extrémités en forme de dôme).

Par soucis de simplification, l'orifice de sortie du fluide situé en partie inférieure I n'est pas représenté. Classiquement un tel réservoir est constitué d'une structure en alliage d'aluminium isolé avec des panneaux de mousse cellulaire.

Selon une particularité de l'invention le réservoir contient une cloison 2 fixe située dans le volume de stockage et agencée pour retenir le liquide lors d'accélérations importantes latérales et/ou axiales.

La cloison 2 délimite des volumes supérieur VS et inférieur VI pour le fluide dans le réservoir 1 et communiquant via au moins une ouverture 3 formée dans la cloison 2. C'est-à-dire que la cloison 2 n'est pas intégrale mais permet au fluide à s'écouler normalement vers le bas pendant les phases de vidanges notamment.

La cloison 2 a par exemple la forme générale d'un entonnoir.

La cloison 2 peut être réalisée en matériau très léger (tissu de verre), notamment lorsque le réservoir stocke de l'hydrogène liquide (relativement léger).

Ainsi, lorsque le niveau de liquide L se trouve en dessous de la cloison 2 (figure 2), celle-ci permet d'éviter la remontée du liquide L et même de stocker le liquide en cas d'accélération adverse lorsque celle-ci est appliquée à la suite d'une phase avec du roulis.

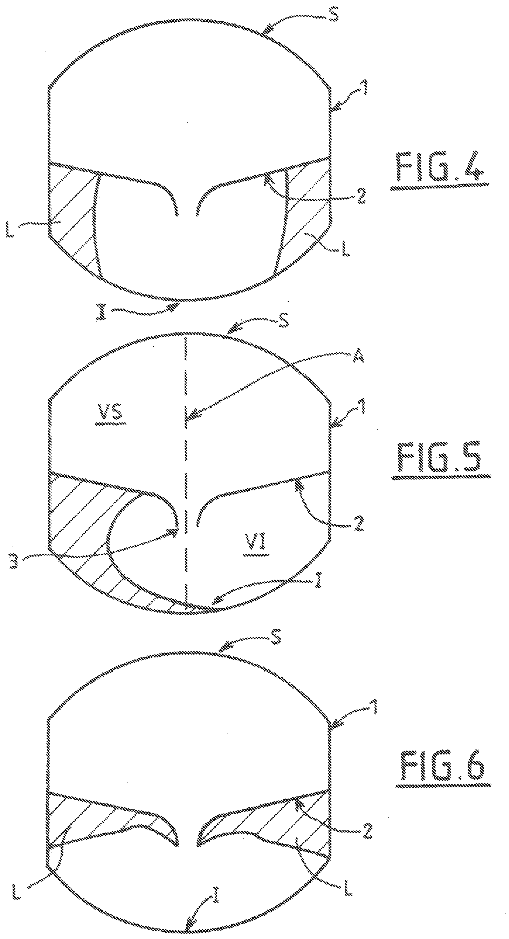

Les figures 3 à 5 illustrent le comportement du liquide L lorsque le réservoir est soumis à de fortes perturbations dynamiques : roulis faible associé à une accélération faible (figure 3), roulis fort associé à une accélération faible (figure 4), ballottement (figure 5), accélération adverse (figure 6).

Ainsi, durant ces phases de sollicitation, le liquide L mouille une surface pariétale assez limitée et ne vient pas en contact avec le dôme gazeux supérieur initialement chaud (non représenté par soucis de simplification). L'évaporation de liquide L est ainsi limitée. Le refroidissement du dôme gazeux dans le réservoir est également limité.

De préférence, la face inférieure de la cloison 2 délimite un volume utile V ayant la capacité de retenir tout ou presque tout le volume de liquide du réservoir (cf. figure 1).

Ce volume utile de rétention peut par exemple être délimité par la cloison 2, une portion adjacente de la paroi du réservoir et un plan fictif horizontal passant par les points les plus bas de la cloison 2 (cf. figure 1 volume utile V en traits verticaux).

Ainsi, pour une rétention complète du liquide, le volume utile de rétention délimité par la cloison 2 devra être supérieur au volume stocké avant les phases de vol concernées (fin de poussée, mise à poste, phase balistique, rallumage du moteur, ...).

Ce volume de rétention peut également être dimensionné uniquement pour des phénomènes de roulis et de ballottement (pas pour des accélérations adverses). Dans ce cas le volume utile de rétention pourra être relativement plus petit que le volume de liquide stocké initialement.

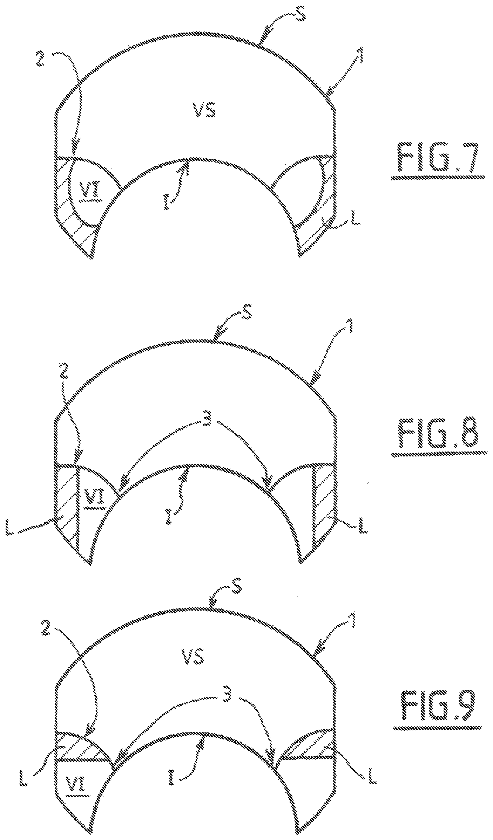

Les figures 7 à 9 représentent l'invention appliquée à un réservoir dit « à fond concave » (la convexité étant à l'intérieur du réservoir 1).

Dans cet exemple, une partie du fond peut se trouver au-dessus d'une partie de la cloison 2 c'est-à-dire que la cloison entoure le fond bombé du réservoir. Les éléments identiques à ceux décrits ci-dessus sont désignés par les mêmes références aux figures 7 à 9.

L'ouverture 3 est délimitée par l'interstice entre la cloison 2 et la paroi du fond bombé du réservoir 1.

Comme précédemment, l'invention permet de retenir tout ou partie du liquide en partie basse en cas de faible poussée et faible roulis (fig. 7), en cas de faible poussée et fort roulis (fig. 8) et en cas d'accélération adverse (fig. 9).

On conçoit donc aisément que, tout en étant de structure simple et peu coûteuse, l'invention permet de résoudre tout ou partie des problèmes ci-dessus.

Le ou les orifices 3 sont libres, c'est-à-dire non pourvus de grilles, filtres ou équivalents, c'est-à-dire que les volumes supérieur VS et inférieur VI forment un seul et même volume de stockage avec des pressions identiques (par opposition aux réservoirs à tension superficielle non concernés par l'objet de l'invention). Ces réservoirs à tension superficielle utilisent des crépines contrairement au réservoir selon l'invention).

## Revendications

1. Réservoir cryogénique de lanceur spatial destiné à contenir un fluide cryogénique, en particulier un ergol cryogénique, comprenant une paroi délimitant un volume de stockage pour le fluide cryogénique ayant une extrémité supérieure (S) et une extrémité inférieure (I), comportant au moins une cloison (2) située dans le volume de stockage, ladite cloison (2) délimitant des volumes supérieur (VS) et inférieur (VI) pour le fluide dans le réservoir (1) communiquant via au moins une ouverture (3) libre formée dans la cloison (2) en partie centrale du réservoir (1), **caractérisé en ce que** la cloison (2) s'étend depuis la paroi du réservoir (1) vers le centre du volume de stockage en s'inclinant légèrement jusqu'à l'ouverture (3) centrale en direction de l'extrémité inférieure (I) du réservoir (1), pour d'une part permettre l'écoulement du liquide par gravité depuis le volume supérieur (VS) vers le volume inférieur (VI) et, d'autre part empêcher la remontée du fluide depuis le volume inférieur (VI) vers volume supérieur (VS) sous l'action de forces d'accélération et **en ce que** la cloison (2) est flexible et **en ce que** la cloison (2) s'étend sur la majorité de la section intérieure du réservoir selon une direction sensiblement perpendiculaire à un axe vertical (A) du réservoir passant par les extrémités supérieure (S) et inférieure (I) du réservoir (1), le rapport entre d'une part la surface de l'ouverture (3) de la cloison (2) et, d'autre part, la section intérieure du réservoir (1) dans un plan sensiblement perpendiculaire à l'axe vertical (A) du réservoir et passant par le plan de l'ouverture (3) étant compris entre 0,01 et 0,1.

2. Réservoir cryogénique selon la revendication 1, **caractérisé en ce qu'**au moins une partie de la cloison (2) est légèrement inclinée en direction de l'extrémité inférieure (I) du réservoir (1).

3. Réservoir cryogénique selon l'une quelconque des revendications 1 à 2, **caractérisé en ce que** la cloison (2) comporte une portion tubulaire orientée vers l'extrémité inférieure (I) du réservoir (1) et définissant l'ouverture (3).

4. Réservoir cryogénique selon l'une quelconque des revendications 1 à 3, **caractérisé en ce que** la cloison (2) est située sensiblement à mi-hauteur du réservoir.

5. Réservoir cryogénique selon l'une quelconque des revendications 1 à 4, **caractérisé en ce que** la cloison (2) est constituée de tissu de verre.

6. Réservoir cryogénique selon l'une quelconque des revendications 1 à 5, **caractérisé en ce que** les volumes supérieur (VS) et inférieur (VI) sont à la même pression.

7. Lanceur spatial, **caractérisé en ce qu'**il comporte un réservoir cryogénique conforme à l'une quelconque des revendications 1 à 6.

## Patentansprüche

1. Trägerraketen-Kryobehälter zum Enthalten eines kryogenen Fluids, insbesondere eines kryogenen Treibstoffs, bestimmt, umfassend eine ein Speichervolumen für das kryogene Fluid begrenzende Wand (2), die ein oberes Ende (5) und ein unteres Ende (I) aufweist, mindestens eine im Speichervolumen befindliche Trennwand (2) beinhaltend, wobei die Trennwand (2) ein oberes (VS) und ein unteres (VI) Volumen für das Fluid im Behälter (1) begrenzt, die über mindestens eine freie Öffnung (3) kommunizieren, die in der Trennwand (2) im mittleren Teil des Behälters gebildet ist,
**dadurch gekennzeichnet, dass** sich die Trennwand (2) von der Wand (2) des Behälters zur Mitte des Speichervolumens erstreckt, wobei sie in Richtung des unteren Endes (I) des Behälters (1) bis zur mittleren Öffnung (3) leicht geneigt ist, um einerseits ein Abfließen der Flüssigkeit mittels Schwerkraft vom oberen Volumen (VS) zum unteren Volumen (VI) zu ermöglichen und andererseits das Aufsteigen des Fluids vom unteren Volumen (VI) zum oberen Volumen (VS) unter Einwirkung von Beschleunigungskräften zu verhindern, und dadurch, dass die Trennwand (2) biegsam ist und dadurch, dass sich die Trennwand (2) in einer Richtung, die im Wesentlichen senkrecht zu einer durch das obere (S) und das untere Ende (I) des Behälters (1) verlaufenden vertikalen Achse (A) des Behälters ist, über den Großteil des inneren Abschnitts des Behälters erstreckt, wobei das Verhältnis zwischen einerseits der Oberfläche der Öffnung (3) der Trennwand (2) und andererseits dem inneren Abschnitt des Behälters (1) in einer Ebene, die im Wesentlichen senkrecht zur vertikalen Achse (A) des Behälters ist und durch die Ebene der Öffnung (3) verläuft, zwischen 0,01 und 0,1 liegt.

2. Kryobehälter nach Anspruch 1, **dadurch gekennzeichnet, dass** mindestens ein Teil der Trennwand (2) in Richtung des unteren Endes (I) des Behälters (1) leicht geneigt ist.

3. Kryobehälter nach einem der Ansprüche 1 bis 2, **dadurch gekennzeichnet, dass** die Trennwand (2) einen rohrförmigen Abschnitt beinhaltet, der in Richtung des unteren Endes (I) des Behälters (1) gerichtet ist und die Öffnung (3) definiert.

4. Kryobehälter nach einem der Ansprüche 1 bis 3, **dadurch gekennzeichnet, dass** sich die Trennwand (2) im Wesentlichen auf halber Höhe des Behälters befindet.

5. Kryobehälter nach einem der Ansprüche 1 bis 4, **dadurch gekennzeichnet, dass** die Trennwand (2) aus Glasfasergewebe besteht.

6. Kryobehälter nach einem der Ansprüche 1 bis 5, **dadurch gekennzeichnet, dass** das obere (VS) und das untere (VI) Volumen auf demselben Druck sind.

7. Trägerrakete, **dadurch gekennzeichnet, dass** sie einen Kryobehälter nach einem der Ansprüche 1 bis 6 beinhaltet.

## Claims

1. Space launcher cryogenic reservoir intended to contain a cryogenic fluid, in particular a cryogenic propellant, comprising a wall (2) defining a storage volume for the cryogenic fluid having an upper end (5) and a lower end (I), comprising at least one partition wall (2) located in the storage volume, said partition wall (2) defining upper (VS) and lower (VI) volumes for the fluid in the tank (1) communicating via at least one free opening (3) formed in the partition wall (2) in the central portion of the tank,
**characterised in that** the partition wall (2) extends from the wall (2) of the tank to the centre of the storage volume by being inclined slightly until the central opening (3) in the direction of the lower end (I) of the tank (1), in order, on the one hand to make it possible for the liquid to flow under gravity from the upper volume (VS) to the lower volume (VI) and, on the other hand, to prevent the fluid from rising from the lower volume (VI) to the upper volume (VS) under the action of acceleration forces and **in that** the partition wall (2) is flexible and **in that** the partition wall (2) extends over most of the inner section of the tank according to a direction substantially perpendicular to a vertical axis (A) of the tank passing through the upper (S) and lower (I) ends of the tank (1), with the ratio between, on the one hand, the surface of the opening (3) of the partition wall (2) and, on the other hand, the inner section of the tank (1) in a plane substantially perpendicular to the vertical axis (A) of the tank and passing through the plane of the opening (3) being between 0.01 and 0.1.

2. Cryogenic reservoir according to claim 1, **characterised in that** at least one portion of the partition wall (2) is slightly inclined in the direction of the lower end (I) of the tank (1).

3. Cryogenic reservoir according to any of claims 1 to 2, **characterised in that** the partition wall (2) comprises a tubular portion oriented towards the lower end (I) of the tank (1) and defining the opening (3).

4. Cryogenic reservoir according to any of claims 1 to 3, **characterised in that** the partition wall (2) is substantially located at mid-height of the tank.

5. Cryogenic reservoir according to any of claims 1 to 4, **characterised in that** the partition wall (2) is formed from glass fabric.

6. Cryogenic reservoir according to any of claims 1 to 5, **characterised in that** the upper (VS) and lower (VI) volumes are at the same pressure.

7. Space launcher, **characterised in that** it comprises a cryogenic reservoir in accordance with any of claims 1 to 6.
